# EUROPÄISCHE PATENTSCHRIFT

(11) **EP 3 117 109 B1**
(45) Veröffentlichungstag und Bekanntmachung des Hinweises auf die Patenterteilung: **01.01.2020**
(21) Anmeldenummer: 15706731.5
(22) Anmeldetag: 17.02.2015
(51) Int. Cl.: F16B 25/00, F16B 41/00, F16B 5/02, F16B 25/10

(54) **VERFAHREN ZUM HERSTELLEN EINER SCHRAUB-KLEBVERBINDUNG UNTER VERWENDUNG EINER FLIESSLOCHFORMENDEN SCHRAUBE, SOWIE HIERNACH HERGESTELLTER BAUTEILVERBUND**
METHOD FOR PRODUCING AN ADHESIVE SCREW CONNECTION USING A FLOW DRILL SCREW, AND COMPOSITE COMPONENT PRODUCED THEREBY
PROCÉDÉ POUR PRODUIRE UNE LIAISON D'ADHÉRENCE PAR VIS AU MOYEN D'UNE VIS DE FLUOPERÇAGE ET EMSEMBLE PRODUIT AU MOYEN DE CE PROCÉDÉ

(30) Priorität: 10.03.2014 DE 102014204292
(43) Veröffentlichungstag der Anmeldung: 18.01.2017
(73) Patentinhaber: Bayerische Motoren Werke Aktiengesellschaft, 80809 München (DE)
(72) Erfinder: HAAK, Eugen, 85368 Mooosburg an der Isar (DE)
(86) Internationale Anmeldenummer: PCT/EP2015/053247
(87) Internationale Veröffentlichungsnummer: WO 2015/135722

(56) Entgegenhaltungen:
- EP-A2- 2 423 518
- DE-A1-102007 033 126
- DE-A1-102010 050 979
- DE-A1-102012 210 791
- US-A- 5 094 579
- US-A1- 2009 278 371

## Beschreibung

Die Erfindung betrifft ein Verfahren zum Herstellen einer Schraub-Klebverbindung zwischen wenigstens einem oberen Bauteil und wenigstens einem unteren Bauteil unter Verwendung einer fließlochformenden Schraube.

Die Erfindung betrifft ferner einen verfahrensgemäß hergestellten Bauteilverbund, wobei es sich insbesondere um ein Karosserieteil handelt.

Das Herstellen einer Schraub-Klebverbindung zwischen Bauteilen durch Verkleben und fließlochformendes Verschrauben ist aus dem Stand der Technik hinreichend bekannt. Diesbezüglich wird bspw. auf die DE 103 48 427 A1 hingewiesen. Der Vorgang des spanlosen Fließloch- und Gewindeformens sowie eine geeignete loch- und gewindeformende bzw. fließlochformende Schraube sind anschaulich in der DE 39 09 725 C1 dargestellt.

Das obere Bauteil kann, insbesondere wenn dieses eine zum Fließlochformen ungeeignete Materialdicke und/oder -härte aufweist oder aus einem zum Fließlochformen ungeeigneten Material (bspw. FVK) gebildet ist, eine Vorlochung aufweisen, wie in der DE 10 2012 210 791 A1 gezeigt. Während des Einschraubvorgangs trifft die Schraubenspitze und im Weiteren auch der selbstformende Gewindeabschnitt der fließlochformenden Schraube auf die zuvor aufgebrachte Klebstoffschicht, wodurch der Klebstoff aufgewirbelt und aus dem Vorloch heraus geschleudert wird. Dies führt zu einer Verschmutzung der Einschraubvorrichtung und/oder der Bauteile. Ferner beeinträchtigt der aus dem Vorloch austretende Klebstoff die Drehmomentregelung der Einschraubvorrichtung. Bislang wird daher die Einschraubstelle von einem Klebstoffauftrag ausgespart. Der klebstofffreie Abschnitt macht jedoch den Klebstoffauftrag aufwändiger und führt zu einer unterbrochenen Klebenaht.

Der Erfindung liegt die Aufgabe zugrunde ein Verfahren zum Herstellen einer Schraub-Klebverbindung zwischen wenigstens einem vorgelochten oberen Bauteil und wenigstens einem unteren Bauteil unter Verwendung einer fließlochformenden Schraube anzugeben, das wenigstens einen mit dem Stand der Technik einhergehenden Nachteil nicht oder zumindest nur in einem verminderten Umfang aufweist.

Diese Aufgabe wird gelöst durch ein erfindungsgemäßes Verfahren mit den Merkmalen des Anspruchs 1. Mit dem nebengeordneten Anspruch erstreckt sich die Lösung der Aufgabe auch auf einen verfahrensgemäß hergestellten Bauteilverbund. Vorteilhafte und bevorzugte Weiterbildungen und Ausgestaltungen ergeben sich analog für beide Erfindungsgegenstände sowohl aus den abhängigen Ansprüchen als auch aus den nachfolgenden Erläuterungen.

Das erfindungsgemäße Verfahren zum Herstellen einer Schraub-Klebverbindung zwischen wenigstens einem oberen vorgelochten Bauteil und wenigstens einem unteren Bauteil unter Verwendung einer fließlochformenden Schraube, die an der Fügestelle das obere Bauteil durch ein Vorloch durchdringt bzw. durchstreckt und mit dem unteren Bauteil unter Ausbildung eines Fließlochs verschraubt wird, sieht vor, dass das Vorloch im oberen Bauteil durch einen am oberen Bauteil befestigten Deckel abgedeckt wird, der zunächst von der fließlochformenden Schraube durchlocht wird, bevor diese in das Vorloch eindringen kann und im Weiteren mit dem unteren Bauteil verschraubt wird, wobei der durchlochte Deckel nun als Unterlegscheibe für den Schraubenkopf der fließlochformenden Schraube dient.

Bevorzugt wird das erfindungsgemäße Verfahren automatisiert ausgeführt. Es können mehrere obere, vorgelochte Bauteile und/oder mehrere untere Bauteile vorgesehen sein. Die Bauteile sind an ihren einander zugewandten Flächen miteinander verklebt. Der Klebstoff kann flächig oder entlang wenigstens einer Bahn (zur Erzeugung einer Klebenaht) aufgebracht sein.

Der das Vorloch im oberen Bauteil abdeckende Deckel verhindert einen Klebstoffaustritt während des Einschraubvorgangs. Dadurch können die Bauteile und die Einschraubvorrichtung (einschließlich der verwendeten Spannwerkzeuge) nicht durch austretenden Klebstoff verunreinigt werden. Ferner bleibt die Drehmomentregelung, sofern vorgesehen, stabil. Der Klebstoffauftrag kann durchgängig bzw. vollflächig erfolgen, wodurch das Auftragen, insbesondere das automatisierte Auftragen, vereinfacht wird und sich auch Vorteile hinsichtlich der erzielten Verbindungsfestigkeit und des Korrosionsverhaltens an der Fügestelle ergeben. Der Deckel verhindert ferner auch ein Verschmutzen des Vorlochs vor dem Einschraubvorgang. Dies ist keine abschließende Aufzählung von Vorteilen, die mit der Erfindung einhergehen.

Eine fließlochformende Schraube, d. h. eine zum spanlosen Fließloch- und Gewindeformen geeignete Schraube, weist einen Schraubenschaft mit einem von der Schaft- bzw. Schraubenspitze ausgehenden Lochformungsabschnitt und einem sich in Richtung des Schraubenkopfs anschließenden selbstformenden Gewindeabschnitt auf.

Bevorzugt ist vorgesehen, dass es sich bei dem Vorloch im oberen Bauteil um eine Durchgangsbohrung mit Kreisquerschnitt handelt. Ferner ist bevorzugt vorgesehen, dass der Deckel den gesamten Bohrungsrand des Vorlochs überdeckt und hierzu vorzugsweise ebenfalls kreisförmig ausgebildet ist, wobei der Deckel aber auch eine andere Form bzw. einen anderen Umriss aufweisen kann.

Der Durchmesser des Deckels richtet sich bevorzugt nach dem Durchmesser des Schraubenkopfs der verwendeten fließlochformenden Schraube, wobei insbesondere vorgesehen ist, dass der Deckel einen um wenigstens 2 mm größeren Durchmesser (radial wenigstens 1 mm) als der Schraubenkopf der verwendeten fließlochformenden Schraube aufweist. Dadurch wird gewährleistet, dass der Schraubenkopf, trotz Einschraubtoleranz (insbesondere beim automatisierten Einschrauben), in radialer Richtung nicht übersteht bzw. über den Deckelrand hinausragt (vorsteht).

Es kann vorgesehen sein, dass der Deckel, insbesondere unter Berücksichtigung des Schraubenkopfdurchmessers, einen Durchmesser aufweist, mit dem sich ein radialer Überstand bezüglich des Bohrungsrands des Vorlochs zwischen 1 mm bis 8 mm und insbesondere zwischen 2 mm bis 5 mm ergibt.

Der Deckel ist bevorzugt aus einem Material gebildet, dass von der fließlochformenden Schraube durch Andrücken und Rotation spanlos durchlocht werden kann. Bevorzugt ist der Deckel aus einem Blechmaterial und besonders bevorzugt aus einem Stahlblech gebildet. Insbesondere handelt es sich um ein Blechstanzteil. Bevorzugt weist das Blechmaterial und insbesondere Stahlblech eine Dicke von nicht mehr als 1,2 mm und insbesondere von nur etwa 0,8 mm auf. Beim Durchlochen des Deckels bildet sich bevorzugt ein Fließloch im Deckel aus. Der Deckel kann mit einer Durchgangsbohrung ausgebildet sein.

Das obere Bauteil ist bevorzugt aus Metall, vorzugsweise aus einem Blechmaterial und insbesondere aus einem Stahlblech gebildet und weist insbesondere eine Dicke (an der Fügestelle) von mehr als 1,2 mm auf. Der, insbesondere metallisch ausgebildete, Deckel kann auf das obere Bauteil aufgeklebt werden, wobei die Verklebung im Überstandsbereich erfolgt. Die Befestigung des Deckels kann auch durch Aufpressen erfolgen, wozu insbesondere der Schnittgrat an einem als Stanzteil ausgebildeten Deckel für ein formschlüssiges Aufpressen bzw. Verpressen mit dem oberen Bauteil genutzt werden kann. Bevorzugt ist vorgesehen, dass der Deckel auf das obere Bauteil aufgeschweißt bzw. am oberen Bauteil festgeschweißt wird. Das Verschweißen erfolgt bevorzugt durch Buckelschweißen oder Reibschweißen.

Das obere Bauteil kann auch aus einem faserverstärkten Kunststoff, wie insbesondere aus glasfaserverstärktem Kunststoff (GFK) oder kohlenstofffaserverstärktem Kunststoff (CFK), gebildet sein. Der Deckel kann, analog zu den vorausgehenden Erläuterungen, aufgeklebt oder aufgepresst werden.

Das untere Bauteil ist bevorzugt aus einem zum Fließlochformen geeigneten Material, insbesondere einem Stahlblech- oder Aluminiumblechmaterial, mit einer zum Fließlochformen geeigneten Materialdicke bzw. Blechdicke gebildet.

Die Befestigung des Deckels am oberen Bauteil muss spätestens vor Beginn des Einschraubvorgangs abgeschlossen sein. Bevorzugt erfolgt das Befestigen aller Deckel unmittelbar im Anschluss an die Vorlochoperation, wobei dies auch bei einem Zulieferer geschehen kann.

Ein erfindungsgemäßer Bauteilverbund umfasst wenigstens ein vorgelochtes oberes Bauteil und wenigstens ein unteres Bauteil, wobei diese Bauteile an wenigstens einer Fügestelle mit einer erfindungsgemäß hergestellten Schraub-Klebverbindung gefügt sind, derart, dass der Schraubenschaft der verwendeten fließlochformenden Schraube das obere Bauteil durch ein Vorloch durchragt bzw. durchstreckt und in das untere Bauteil eingeschraubt ist und ein am oberen Bauteil befestigter und durchlochter Deckel als Unterlegscheibe für den Schraubenkopf der fließlochformenden Schraube fungiert, wozu dieser zwischen der Unterseite des Schraubenkopfs und der dem Schraubenkopf zugewandten Außenseite des oberen Bauteils dauerhaft eingeklemmt ist. Bei dem Bauteilverbund handelt es sich insbesondere um ein Karosserieteil.

Der ursprünglich zur Abdeckung des Vorlochs im oberen Bauteil vorgesehene Deckel hat somit auch eine weitergehende Funktion als Kopfunterlegscheibe. Die Kopfunterlegscheibe, respektive der Deckel, kann, insbesondere auch bei schief gesetzter Schraube, als Dichtung dienen, um das Eindringen korrosiver Medien in das Vorloch und/oder einen Unterkopfspalt zu verhindern. Ferner kann die vom Schraubenkopf auf die Außenseite des oberen Bauteils ausgeübte Flächenpressung verringert oder harmonisiert werden. Bevorzugt ist der Deckel bezüglich des Schraubenmaterials und/oder bezüglich des Materials des oberen Bauteils aus einem weicheren Material gebildet.

Ein erfindungsgemäßer Bauteilverbund kann mehrere obere, vorgelochte Bauteile und/oder mehrere untere Bauteile umfassen. Bevorzugt ist/sind das obere Bauteil und insbesondere auch das untere Bauteil blechartig ausgebildet.

Die Erfindung wird nachfolgend anhand einer schematischen und nicht maßstabsgetreuen Figur beispielhaft näher erläutert. Die in der Figur gezeigten und/oder nachfolgend erläuterten Merkmale können, unabhängig von konkreten Merkmalskombinationen, allgemeine Merkmale der Erfindung sein.

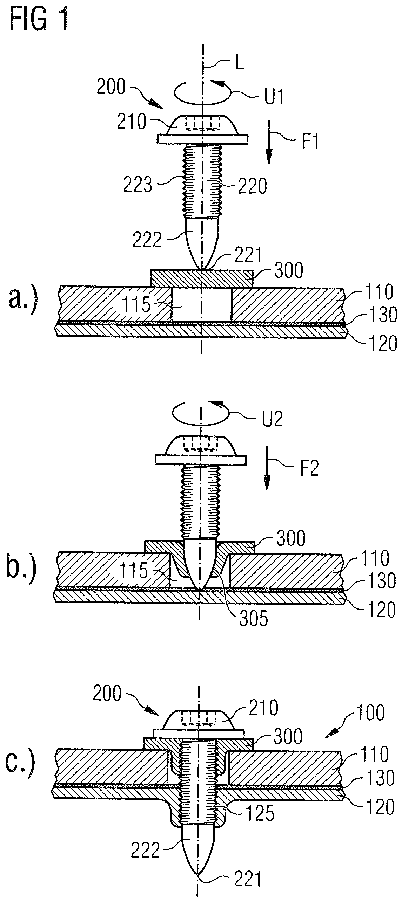

- Fig. 1: zeigt in drei Schnittdarstellungen einen erfindungsgemäßen Einschraubvorgang.

Fig. 1a zeigt ausschnittsweise zwei blechartige Bauteile 110 und 120, die an der dargestellten Fügestelle mit Hilfe einer fließlochformenden Schraube 200 gefügt werden sollen. Zwischen den Bauteilen 110 und 120 befindet sich ein durchgängiger Klebstofffilm bzw. eine Klebstoffzwischenschicht 130. Die fließlochformende Schraube 200 weist einen Schraubenkopf 210 und einen daran angeformten, sich in axialer Richtung L (Schraubenachse) erstreckenden Schraubenschaft 220 auf. Der Schraubenschaft 220 ist mit einem von der stumpfen bzw. verrundeten Schaft- bzw. Schraubenspitze 221 ausgehenden Lochformungsabschnitt 222 und einem sich in Richtung des Schraubenkopfs 210 anschließenden selbstformenden Gewindeabschnitt 223 ausgebildet. Der selbstformende Gewindeabschnitt 223 kann sich, wie gezeigt, bis zum Schraubenkopf 210 erstrecken. Ebenso kann der kopfnahe bzw. an den Schraubenkopf 210 angrenzende Schaftabschnitt ohne Gewinde bzw. gewindelos ausgebildet sein. Die fließlochformende Schraube 200 ist als solche aus dem Stand der Technik bekannt.

Das obere Bauteil 110 weist an der Fügestelle ein Vorloch 115 auf, das erfindungsgemäß durch einen am oberen Bauteil 110 befestigten Deckel (bzw. Abdeckplättchen) 300 abgedeckt ist. Das Vorloch 115 wird quasi durch den plättchenartigen Deckel 300 verschlossen. Der aus einem Blechmaterial gebildete Deckel 300 überragt das Vorloch 115 in radialer Richtung und ist in diesem kreisringförmigen Überstandsbereich mit dem oberen Bauteil 110 verklebt oder verschweißt, so dass zwischen dem Deckel 300 und dem oberen Bauteil 110 keine Relativbewegungen möglich sind. Der radiale Überstand des Deckels 300 bzgl. des Bohrungsrands des Vorlochs 115 beträgt bspw. 1 mm bis 4 mm und insbesondere 2 mm bis 3 mm, wie obenstehend erläutert.

Der, insbesondere automatisiert ausgeführte, Einschraubvorgang unterteilt sich im Wesentlichen in zwei Phasen. In der ersten Phase wird der Deckel 300 von der Schraube 200 durchlocht und in der zweiten Phase wird die Schraube 200 in das untere Bauteil 120 eingeschraubt, wobei dies wiederum in zwei Teilphasen erfolgt (Fließlochformung und Gewindeformung mit gleichzeitigem Gewindeeingriff).

Zu Beginn des Einschraubvorgangs wird die fließlochformende Schraube 200 mit einer Kraft F1 und einer Umdrehungszahl U1 in axialer Flucht mit dem Vorloch 115 gegen den Deckel 300 gedrückt (die Einschraubvorrichtung ist nicht dargestellt), worauf hin der Lochformungsabschnitt 222 an der Schraube 200 in bekannter Weise ein Fließloch 305 im Deckel 300 ausbildet und dadurch der Deckel 300 durchlocht wird.

Abweichend zu der in Fig. 1a gezeigten Ausführungsmöglichkeit kann der Deckel 300 bereits mit einem Durchgangsloch ausgebildet sein, das vom Lochformungsabschnitt 222 der Schraube 200 aufgeweitet wird. Hierzu weist das, insbesondere konzentrisch ausgebildete, Durchgangsloch bezüglich des Nenndurchmessers der Schraube 200 einen kleineren Durchmesser auf.

Während des weiteren Einschraubvorgangs trifft die nun im Vorloch 115 befindliche Schraubenspitze 221 auf das untere Bauteil 120, wie in Fig. 1b dargestellt, und wird mit einer Umdrehungszahl U2 und einer Kraft F2 gegen das untere Bauteil 120 gedrückt, wodurch sich in bekannter Weise ein Fließloch 125 im unteren Bauteil 120 ausbildet, in das der selbstformende Gewindeabschnitt 223 der Schraube 200 eingeschraubt wird. Der Deckel 300 verschließt währenddessen das Vorloch 115 im oberen Bauteil 110 und verhindert, dass aufgewirbelter Klebstoff 130 oder durch das Schraubengewinde 123 nach oben geförderter Klebstoff 130 aus dem Vorloch 115 heraus geschleudert wird. Ferner wird die Schraube 200 während dieser zweiten Phase des Einschraubvorgangs durch das im Deckel 300 ausgebildete Fließloch 305 innerhalb des Vorlochs 115 zentriert und ein Berührungskontakt zwischen dem Schraubenschaft 220 und der Innenwandung des Vorlochs 115 wird verhindert.

Während des gesamten Einschraubvorgangs kann die axiale Druckkraft F oder die Umdrehungszahl U variiert und insbesondere geregelt werden. Auch eine Drehrichtungsumkehr kann vorgesehen sein. Ferner kann ein Niederhalter oder dergleichen zum Aufbringen einer Fixierkraft auf das obere Bauteil 110 verwendet werden.

Nach dem Einschraubvorgang wird das obere, dem Schraubenkopf 210 zugewandte Bauteil 110 durch formschlüssige Klemmung zwischen dem Schraubenkopf 210 und dem unteren, vom Schraubenkopf 210 abgewandten Bauteil 120 fixiert, weswegen das obere Bauteil 110 auch als Klemmteil bezeichnet werden kann. Dies ist in Fig. 1c dargestellt. Der Schraubenkopf 210 weist einen größeren Durchmesser als das Vorloch 115 im oberen (dem Schraubenkopf 210 zugewandten) Bauteil 110 auf, so dass das Vorloch 115 in beabsichtigter Weise vollständig vom Schraubenkopf 210 überdeckt wird. Der zwischen Schraubenkopf 210 und oberen Bauteil 110 befindliche Deckel 300 weist seinerseits einen größeren Durchmesser als Schraubenkopf 210 auf, wie obenstehend bereits erläutert.

Wie ferner aus Fig. 1c ersichtlich, kann der durch das Fließlochformen verformte Deckel 300, bzw. dessen in das Vorloch 115 hineinragende Durchzug, in radialer Richtung einen Formschluss zwischen dem Schraubenschaft 220 und dem oberen Bauteil 110 herbeiführen (nicht dargestellt), wodurch Scherbelastungen zwischen den Bauteilen 110 und 120, insbesondere vor Aushärten des Klebstoffs 130, besser ertragen werden, ohne dass die Bauteile gegeneinander verrutschen.

Der Klebstoff der Klebstoffschicht 130 zwischen den Bauteilen 110 und 120 kann nachfolgend, bspw. in einem KTL-Prozess, ausgehärtet werden. Der durchlochte Deckel 300 verbleibt als Kopfunterlegscheibe und kann im Weiteren der Abdichtung des Vorlochs 115 dienen. Abweichend zu der gezeigten Darstellung, in der der Deckel bzw. die Kopfunterlegscheibe 300 in radialer Richtung den Schraubenkopf 210 überragt (d. h. der Deckel 300 hat einen größeren Durchmesser als der Schraubenkopf 210), kann der Deckel bzw. die Kopfunterlegscheibe 300 durch entsprechende Abstimmung des Deckeldurchmessers in radialer Richtung mit dem Schraubenkopf 210 abschließen oder auch radial zurückgesetzt sein.

Der in Fig. 1c ausschnittsweise gezeigte Bauteilverbund 100 weist ein oberes Bauteil 110 und ein unteres Bauteil 120 auf, wobei die Bauteile 110 und 120 mittels Klebstoffzwischenschicht 130 verklebt sind und an der gezeigten Fügestelle auch mit einer fließlochformenden Schraube 200 gefügt sind, derart, dass der Schraubenschaft 220 das obere Bauteil 110 durch das Vorloch 115 durchragt bzw. durchdringt und durch die Klebstoffzwischenschicht 130 hindurch in das untere Bauteil 120 eingeschraubt ist. Der durchlochte Deckel 300, der ursprünglich zur Abdeckung des Vorlochs 115 im oberen Bauteil 110 vorgesehen war, dient nun als Unterlegscheibe für den Schraubenkopf 210. Die miteinander gefügten Bauteile 110 und 120 können aus verschiedenen Materialien gebildet sein (so genannter Mischbau).

### Bezugszeichenliste

- 100: Bauteilverbund
- 110: oberes Bauteil
- 115: Vorloch
- 120: unteres Bauteil
- 125: Fließloch
- 130: Klebstoff, Klebstoffschicht
- 200: fließlochformende Schraube
- 210: Schraubenkopf
- 220: Schraubenschaft
- 221: Schrauben-, Schaftspitze
- 222: Lochformungsabschnitt
- 223: selbstformender Gewindeabschnitt
- 300: Deckel
- 305: Fließloch
- F: axiale Druckkraft
- L: Längsachse, Schraubenachse
- U: Umdrehungszahl

## Patentansprüche

1. Verfahren zum Herstellen einer Schraub-Klebverbindung zwischen wenigstens einem oberen Bauteil (110) und wenigstens einem unteren Bauteil (120) unter Verwendung einer fließlochformenden Schraube (200), die an der Fügestelle das obere Bauteil (110) durch ein Vorloch (115) durchdringt und mit dem unteren Bauteil (120) unter Ausbildung eines Fließlochs (125) verschraubt wird,
**dadurch gekennzeichnet, dass**
das Vorloch (115) im oberen Bauteil (110) durch einen am oberen Bauteil (110) befestigten Deckel (300) abgedeckt wird, der zunächst von der fließlochformenden Schraube (200) durchlocht wird, bevor diese in das Vorloch (115) eindringen kann und im Weiteren mit dem unteren Bauteil (120) verschraubt wird, wobei der durchlochte Deckel (300) nun als Unterlegscheibe für den Schraubenkopf (210) der fließlochformenden Schraube (200) dient.

2. Verfahren nach Anspruch 1,
**dadurch gekennzeichnet, dass**
der Deckel (300) einen um wenigstens 2 mm größeren Durchmesser als der Schraubenkopf der fließlochformenden Schraube aufweist.

3. Verfahren nach Anspruch 1 oder 2,
**dadurch gekennzeichnet, dass**
der Deckel (300) aus einem Blechmaterial gebildet ist und insbesondere ein Blechstanzteil ist, wobei die Blechdicke bevorzugt nicht mehr als 1,2 mm beträgt.

4. Verfahren nach einem der vorausgehenden Ansprüche 1 bis 3,
**dadurch gekennzeichnet, dass**
das obere Bauteil (110) aus Metall und insbesondere aus Stahlblech gebildet ist und vorzugsweise eine Dicke von mehr als 1,2 mm aufweist.

5. Verfahren nach einem der vorausgehenden Ansprüche und insbesondere nach Anspruch 4,
**dadurch gekennzeichnet, dass**
der Deckel (300) mit dem oberen Bauteil (110) verschweißt wird, insbesondere durch Buckelschweißen oder Reibschweißen.

6. Verfahren nach einem der vorausgehenden Ansprüche 1 bis 3,
**dadurch gekennzeichnet, dass**
das obere Bauteil (110) aus einem faserverstärkten Kunststoff gebildet ist.

7. Verfahren nach einem der vorausgehenden Ansprüche 1 bis 4 und insbesondere nach Anspruch 6,
**dadurch gekennzeichnet, dass**
der Deckel (300) auf das obere Bauteil (110) aufgeklebt oder aufgepresst wird.

8. Verfahren nach einem der vorausgehenden Ansprüche,
**dadurch gekennzeichnet, dass**
die Befestigung des Deckels (300) am oberen Bauteil (110) unmittelbar im Anschluss an die Vorlochoperation erfolgt.

9. Bauteilverbund (100) mit wenigstens einem oberen Bauteil (110) und wenigstens einem unteren Bauteil (120), wobei die Bauteile (110, 120) an wenigstens einer Fügestelle mit einer gemäß einem der vorausgehenden Ansprüche hergestellten Schraub-Klebverbindung gefügt sind,
derart,
dass der Schraubenschaft (220) der verwendeten fließlochformenden Schraube (200) das obere Bauteil (110) durch ein Vorloch (115) durchragt und in das untere Bauteil (120) eingeschraubt ist, und
dass ein am oberen Bauteil (110) befestigter und durchlochter Deckel (300) als Unterlegscheibe für den Schraubenkopf (210) der fließlochformenden Schraube (200) fungiert.

10. Bauteilverbund (100) nach Anspruch 9,
**dadurch gekennzeichnet, dass**
das obere Bauteil (110) und insbesondere auch das untere Bauteile (120) blechartig ausgebildet ist/sind.

## Claims

1. A method for producing a screw-and-adhesive connection between at least one upper component (110) and at least one lower component (120) using a flow drill screw (200) which penetrates the upper component (110) at the joining point through a pre-drilled hole (115) and is screwed to the lower component (120), forming a flow-drilled hole (125),
**characterised in that**
the pre-drilled hole (115) in the upper component (110) is covered by a cover (300) fastened to the upper component (110), which cover is first of all perforated by the flow drill screw (200) before it can penetrate into the pre-drilled hole (115) and furthermore is screw-connected to the lower component (120), wherein the perforated cover (300) then serves as a washer for the screw head (210) of the flow drill screw (200).

2. A method according to Claim 1,
**characterised in that**
the cover (300) has a diameter which is at least 2 mm larger than the screw head of the flow drill screw.

3. A method according to Claim 1 or Claim 2,
**characterised in that**
the cover (300) is formed from a metal sheet material and especially is a stamped sheet metal part, the sheet thickness preferably being no more than 1.2 mm.

4. A method according to one of the preceding Claims 1 to 3,
**characterised in that**
the upper component (110) is formed of metal and especially of steel sheet and preferably has a thickness of more than 1.2 mm.

5. A method according to one of the preceding claims, and especially according to Claim 4,
**characterised in that**
the cover (300) is welded to the upper component (110), especially by projection welding or friction welding.

6. A method according to one of the preceding Claims 1 to 3,
**characterised in that**
the upper component (110) is formed from a fibre-reinforced plastics material.

7. A method according to one of the preceding Claims 1 to 4, and especially according to Claim 6,
**characterised in that**
the cover (300) is glued or pressed onto the upper component (110).

8. A method according to one of the preceding claims,
**characterised in that**
the fastening of the cover (300) to the upper component (110) takes place immediately following the pre-drilling operation.

9. A composite component (100) with at least one upper component (110) and at least one lower component (120), wherein the components (110, 120) are joined at at least one joining point with a screw-and-adhesive connection produced according to one of the preceding claims,
such
that the screw shank (220) of the flow drill screw (200) used penetrates through the upper component (110) through a pre-drilled hole (115) and is screwed into the lower component (120), and
that a cover (300) which is fastened to the upper component (110) and perforated acts as a washer for the screw head (210) of the flow drill screw (200).

10. A composite component (100) according to Claim 9,
**characterised in that**
the upper component (110) and especially also the lower component (120) is/are formed in the manner of a metal sheet.

## Revendications

1. Procédé d'obtention d'une liaison collée-vissée entre au moins un composant supérieur (110) et au moins un composant inférieur (120) en utilisant une vis auto-perforeuse (200) qui traverse le composant supérieur (110) au niveau du point d'assemblage en passant dans un perçage préalable (115) et avec laquelle le composant inférieur (120) est vissé en formant un perçage à fluage (125),
**caractérisé en ce que**
le perçage préalable (115) du composant supérieur (110) par un couvercle (300) est recouvert, fixé sur ce composant supérieur (110), qui est tout d'abord percé par le passage de la vis auto-taraudeuse (200) avant que celle-ci puisse pénétrer dans le perçage préalable (115), puis est vissé avec le composant inférieur (120), le couvercle (300) muni d'un perçage traversant faisant alors office de rondelle pour la tête (210) de la vis auto-taraudeuse (200).

2. Procédé conforme à la revendication 1,
**caractérisé en ce que**
le couvercle (300) à un diamètre supérieur d'au moins 2 mm à la tête de la vis auto-taraudeuse.

3. Procédé conforme à la revendication 1 ou 2,
**caractérisé en ce que**
le couvercle (300) est formé à partir d'une tôle et en particulier d'une pièce en tôle estampée, l'épaisseur de cette tôle n'étant de préférence pas supérieure à 1,2 mm.

4. Procédé conforme à l'une des revendications précédentes 1 à 3,
**caractérisé en ce que**
le composant supérieur (110) est réalisé en métal et en particulier en une tôle d'acier et à de préférence une épaisseur supérieure à 1,2 mm.

5. Procédé conforme à l'une des revendications précédentes et en particulier à la revendication 4,
**caractérisé en ce que**
le couvercle (300) est soudé au composant supérieur (110) par soudage en particulier par bossages ou par soudage, par friction.

6. Procédé conforme à l'une des revendications précédentes 1 à 3,
**caractérisé en ce que**
le composant supérieur (110) est réalisé en un matériau synthétique renforcé par des fibres.

7. Procédé conforme à l'une des revendications précédentes 1 à 4, et en particulier à la revendication 6,
**caractérisé en ce que**
le couvercle (300) est collé ou emmanché à force sur le composant supérieur (110).

8. Procédé conforme à l'une des revendications précédentes,
**caractérisé en ce que**
la fixation du couvercle (300) sur le composant supérieur (110) est effectué directement à la suite de l'opération de pré-perçage.

9. Assemblage de composants (100) comprenant au moins un composant supérieur (110) et au moins un composant inférieur (120), ces composants (110, 120) étant assemblés au niveau d'au moins un point d'assemblage avec une liaison collée-vissée obtenue conformément à l'une des revendications précédentes de sorte que :
la tige (220) de la vis auto-taraudeuse (200) utilisé, traverse le composant supérieur (110) en passant dans un perçage préalable (115) et soit vissée dans le composant inférieur (120), et
qu'un couvercle (300) fixé au composant supérieur (110) et muni d'un perçage traversant fasse office de rondelle pour la tête (210) de la vis auto-taraudeuse (200).

10. Assemblage de composants (100) conforme à la revendication 9,
**caractérisé en ce que**
le composant supérieur (110) et en particulier également le composant inférieur (120) est(sont) en tôle.
